# EUROPEAN PATENT SPECIFICATION

(11) **EP 4 263 384 B1**
(45) Date of publication and mention of the grant of the patent: **04.03.2026**
(21) Application number: 21836239.0
(22) Date of filing: 20.12.2021
(51) Int. Cl.: B65D 81/32

(54) **DEVICE FOR STORING AND DISPENSING FLOWABLE COMPOSITIONS**
VORRICHTUNG ZUM LAGERN UND ABGEBEN VON FLIESSFÄHIGEN ZUSAMMENSETZUNGEN
DISPOSITIF DE STOCKAGE ET DE DISTRIBUTION DE COMPOSITIONS FLUIDIFIABLES

(30) Priority: 21.12.2020 US 202063128434 P
(43) Date of publication of application: 25.10.2023
(73) Proprietor: Solventum Intellectual Properties Company, Maplewood, MN 55144 (US)
(72) Inventor: PEUKER, Marc, 82229 Seefeld (DE); BOEHM, Andreas J., 82229 Seefeld (DE); POSCHMANN, Dieter, 82229 Seefeld (DE); KNEE, Michael, 82229 Seefeld (DE); PREININGER, Martin, 82229 Seefeld (DE)
(74) Representative: Vossius & Partner Patentanwälte Rechtsanwälte mbB
(86) International application number: PCT/IB2021/062045
(87) International publication number: WO 2022/137093

(56) References cited:
- WO-A1-03/074389
- US-A- 3 736 933
- US-A- 5 616 337
- US-A1- 2004 065 679
- US-A1- 2010 183 996
- US-A1- 2013 284 620
- US-B1- 6 585 693
- US-B2- 7 607 534

## Description

### Background

In the dental and orthodontic fields, it is often necessary to perform a large number of manual operations in succession and in a coordinated manner. Often various amounts of dental compositions may be necessary to use on with an individual patient. Small amounts of liquid can be stored and dispensed in receptacles in the form of blister packs. In the thermoformed part of the pack closed off by a removable film there are formed, for example, two recesses which are separate from each other. The first recess may contain a small amount of liquid, and a brush may be placed in the other recess. Examples of certain prior art packaging include the following.

WO-96/03326 discloses a disposable receptacle which has depressions for storing a medicament and an applicator. Both depressions are protected from contamination by means of a peelable covering film. In one embodiment, by pressing on the depression containing the medicament, said medicament is transferred into the depression containing the applicator in order to wet the applicator.

US Patent No. 3,835,834 discloses a treatment kit which has two depressions in a main body, which contain a care substance on the one hand and a swab on the other hand. The main body containing the care substance and the swab is protected from
contamination by means of a sealing film.

EP Patent Application No. 0 895 943 discloses a device for storing and dispensing a flowable substance, with a container made up of two films which are connected to each other to form two chambers for receiving substances and a pocket which is separate from the chambers and is used for removing the mixture of the two substances, the separation between one chamber and the pocket having a transition zone that can be selectively opened. For activating the device, firstly pressure is exerted on one chamber, whereby the substance located in it is transferred into the second chamber via the transition zone. As a result, a positive pressure builds up in the second chamber and leads to bulging of one of the films forming the chambers. To prevent the mixture from flowing back into the first chamber, it is necessary for the device to be bent in the zone between the two chambers.

U.S. Patent No. 7,320,398 discloses a device especially designed for storing and dispensing dental materials. This device comprises a container comprising a first and a second film, which form at least one first chamber for receiving a first substance and a recess that is separated from the chamber and serves to remove the first substance. The separation area between the recess and the first chamber is provided with a passage area that can be opened in a selective manner.

EP Patent No. 1240087 discloses a device for storing and dispensing a free-flowing substance.

Examples of certain dental or orthodontic products commercially available for 3M Company based in St. Paul, Minnesota include 3M^{™} Adper^{™} Prompt^{™} L-Pop Adhesive, 3M^{TM} Transbond^{™} L-Pop Adhesive. 3M^{TM} Clinpro L-pop Blister, 3M^{TM} Unitek^{™} Transbond^{™} and Transbond^{™} Plus Self Etching Primer, 3M^{TM} L-Pop Prime and Bond Adhesive, 3M^{TM} Adper^{™} L-Pop Easy Bond Self-Etch Adhesive, 3M^{TM} L-Pop Single Bond Universal Adhesive, 3M^{TM} L-Pop Scotchbond^{™} Universal and Universal^{™} Plus Adhesive Unit Doses.

US 3 736 933 A relates to single-use hypodermic applicators which are formed of single or multiple chambers containing liquid medicaments of all types. The applicators are formed from synthetic plastic tubing in flattened form with a sterile hollow needle sealed therein and projecting from the front end of the applicator body with the inner end of the needle enlarged and sealed within a chamber formed in tubing forwardly of the medicament chamber. A normally heat-sealed seam between chambers is adapted to be ruptured by finger pressure imposed on the outer walls of the medicament chamber to force the medicament from the latter into the forward chamber and through the hollow needle for ejection through the pointed end thereof when the same is inserted into a receiving body. The applicator body is formed with one, two or more medicament chambers separated by burstable seams extending in straight lines transversely of the longitudinal axis of the tubing and provided with critically dimensioned and oriented weakenings so that finger pressure applied selectively to these chambers will control the dosage of medicament forced forwardly towards the enlarged end of the hypodermic needle.

US 5 616 337 A relates to a unit dose package which has two chambers separated by a frangible seal. A liquid or solvent is provided in one of the chambers. An absorptive pad and powder are provided in the other chamber. The liquid and powder are stored separately, to avoid decomposition of the unstable mixture. In use, the first chamber is squeezed or rolled, bursting the seal, and driving the liquid into the second chamber, where it dissolves the powder and is absorbed by the pad. The package is peeled or torn open, and the pad is removed and applied to the skin.

US 2013/284620 A1 relates to a package for a dental material which comprises a compartment for holding a first substance of the dental material and an open reservoir at least partially formed by a wall of the package. The package is adapted such that the compartment and the reservoir are connectable for fluid communication. The reservoir accommodates a second substance of the dental material retained at a surface of the reservoir wall.

US 6 585 693 B1 relates to a unitary syringe having a mounted needle surrounded by a sheath having a break-zone. The fluid medicament to be injected is contained within a blister cavity formed between upper and lower polymeric layers. Accidental needle sticks are reduced by optional guard fingers surrounding the needle.

US 7 607 534 B2 relates to a device for storing and dispensing a flowable substance. The device comprises a container comprising a base member and a cover member being sealingly connected with each other along the circumference of the container, a compartment for receiving the substance, and an open ended pocket area into which the substance is transferable from the compartment, and a cannula having an internal passageway being in fluid communication with the pocket for dispensing the substance.

US 2004/065679 A1 relates to a device for storing and dispensing a flowable composition. Said device comprises a first and a second film, a dispensing zone, a first chamber, containing a first substance and a second chamber, containing a second substance. Said chambers are interconnected by a transition zone that can be selectively opened. At least one of the films is deep-drawn in the region of the chambers and at least one of the films is pre-formed in the region of the second chamber, in such a way that once the device has been activated by opening the transition zone, the first substance can to a great extent by completely transferred to the second chamber, increasing the volume of said chamber as a result.

### Summary

The invention is defined in the appended claims. Aspects, embodiments and examples disclosed herein which do not fall within the scope of the appended claims do not form part of the invention and are merely provided for illustrative purposes.

The disclosure relates to devices for storing and dispensing a flowable composition, and method of making the same.

In one example, the disclosure is directed to a device for storing and dispensing a flowable dental composition, comprising: a first layer and a second layer, wherein the first layer and second layer form a first chamber for containing a flowable dental composition, a transition zone, and a second chamber; an applicator retained within the second chamber; wherein the first chamber has a first concave surface formed in the first layer and a second concave surface formed in the second layer; wherein the device includes an inactive state and an active state, wherein when in the inactive state, the substance is retained in the first chamber, and wherein when in the active state, a portion of the second surface is substantially non-reversibly deformed in response to pressure applied to the first chamber and the substance is thereby dispensed through the transition zone and into the second chamber.

In another example, the disclosure is directed to a device for storing and dispensing a flowable dental composition, comprising: a first layer and a second layer, wherein the first layer and second layer form a first chamber, wherein the first chamber contains a flowable dental composition, a transition zone, and a second chamber; an applicator retained within the second chamber; wherein the first chamber has a first concave surface formed in the first layer and a second concave surface formed in the second layer; wherein the transition zone may be selectively opened by a pressure on the first chamber thereby allowing fluid communication between the first chamber, the transition zone and second chamber.

In another example, the disclosure is directed to device for storing and dispensing a flowable dental composition, comprising: a first layer and a second layer, wherein the first layer and second layer form a first chamber containing a flowable dental composition, a second chamber, and a transition zone; and an applicator retained within the second chamber; wherein the first chamber has a first concave surface formed in the first layer and a second concave surface formed in the second layer; wherein the device includes an inactive state and an active state, wherein when in the inactive state, a first volume of the dental composition is retained in the first chamber, and wherein when in the active state, a second volume of the dental composition in the first chamber is less than the first volume.

In yet another example, the disclosure is directed to a device for storing and dispensing a flowable dental composition, comprising: a first layer and a second layer, wherein the first layer and second layer form a first chamber for containing a flowable dental composition, a transition zone, and a second chamber; wherein the first chamber has a first concave surface formed in the first layer and a second concave surface formed in the second layer; an applicator retained within the second chamber; and a light disruption portion for protecting the flowable dental composition from prematurely curing.

In another example, the disclosure is directed to a device for storing and dispensing a flowable dental composition, comprising: a first layer and a second layer, wherein the first layer and second layer form a first chamber for containing a flowable dental composition, a transition zone, and a second chamber; wherein the first chamber has a first concave surface formed in the first layer and a second concave surface formed in the second layer; an applicator retained within the second chamber; wherein the second concave surface is substantially non-reversibly deformed in response to pressure applied to the first chamber and forms a smooth convex surface aligned with the first concave surface.

In another example, the disclosure is directed to a device for storing and dispensing a flowable orthodontic composition, comprising: a first layer and a second layer, wherein the first layer and second layer form a first chamber for containing a flowable dental composition, a transition zone, and a second chamber; an applicator retained within the second chamber; wherein the first chamber has a first concave surface formed in the first layer and a second concave surface formed in the second layer; wherein the device includes an inactive state and an active state, wherein when in the inactive state, the substance is retained in the first chamber, and wherein when in the active state, a portion of the second surface is substantially non-reversibly deformed in response to pressure applied to the first chamber and the substance is thereby dispensed through the transition zone and into the second chamber.

In yet another example, the disclosure is directed to a device for storing and dispensing a flowable orthodontic composition, comprising: a first layer and a second layer, wherein the first layer and second layer form a first chamber, wherein the first chamber contains a flowable dental composition, a transition zone, and a second chamber; an applicator retained within the second chamber; wherein the first chamber has a first concave surface formed in the first layer and a second concave surface formed in the second layer; wherein the transition zone may be selectively opened by a pressure on the first chamber thereby allowing fluid communication between the first chamber, the transition zone and second chamber.

In another example, the disclosure is directed to a device for storing and dispensing a flowable orthodontic composition, comprising: a first layer and a second layer, wherein the first layer and second layer form a first chamber containing a flowable dental composition, a second chamber, and a transition zone; and an applicator retained within the second chamber; wherein the first chamber has a first concave surface formed in the first layer and a second concave surface formed in the second layer; wherein the device includes an inactive state and an active state, wherein when in the inactive state, a first volume of the dental composition is retained in the first chamber, and wherein when in the active state, a second volume of the dental composition in the first chamber is less than the first volume.

In another example, the disclosure is directed to device for storing and dispensing a flowable orthodontic composition, comprising: a first layer and a second layer, wherein the first layer and second layer form a first chamber for containing a flowable dental composition, a transition zone, and a second chamber; wherein the first chamber has a first concave surface formed in the first layer and a second concave surface formed in the second layer; an applicator retained within the second chamber; and a light disruption portion for protecting the flowable dental composition from prematurely curing.

In another example, the disclosure is directed to a device for storing and dispensing a flowable orthodontic composition, comprising: a first layer and a second layer, wherein the first layer and second layer form a first chamber for containing a flowable dental composition, a transition zone, and a second chamber; wherein the first chamber has a first concave surface formed in the first layer and a second concave surface formed in the second layer; an applicator retained within the second chamber; wherein the second concave surface is substantially non-reversibly deformed in response to pressure applied to the first chamber and forms a smooth convex surface aligned with the first concave surface.

In yet another example, the disclosure is directed to a method (not claimed) of making a device for storing and dispensing a flowable dental or orthodontic composition. The method comprising: providing a first layer; cold forming the first layer, thereby partially forming a first and second chambers; filling of the first chamber with the flowable dental or orthodontic composition; providing a second layer; cold forming the second layer, thereby partially forming the first and second chambers; sealing the second layer to the first layer in surface-area contact, leaving the first and second chambers open, forming a dispensing zone, and forming a transition zone that can be selectively opened between the first and second chambers and in the dispensing zone; dye cutting the desired shape of the device; and partially cutting the first and second layers with a cut for a light disruption portion.

### Brief Description of the Drawings

Figure 1 is a top, schematic view of an exemplary device for storing and dispensing a flowable dental composition;
Figure 2 is a cross-sectional, schematic view of the device of Figure 1 taken along line A-A;
Figures 3A-3C are cross-sectional, schematic views of the device of Figure 1 taken along line A-A, illustrating the steps of dispensing the flowable composition from the first chamber into the second chamber of the device;
Figure 4 is an enlarged, cross-sectional, schematic view of the first layer and second layer of the device;
Figure 5 is an enlarged, cross-sectional, schematic view of the first layer and second layer including an exemplary light disruption portion;
Figure 6 is an enlarged, cross-sectional schematic view of the device of Figure 5;
Figure 7 is a top view of an intermediate manufacturing step of the devices 10 of the present invention;
Figure 8 is a photograph illustrating the differences between prior art devices and the devices of the present invention;
Figures 9A-9C are top, schematic view of additional exemplary devices for storing and dispensing a flowable dental composition;
Figure 10 is a cross-sectional, schematic view of the device for storing and dispensing a flowable dental composition;
Figure 11 is a cross-sectional view of yet another exemplary device for storing and dispensing a flowable dental composition; and
Figures 12A-12D are cross-sectional, schematic views of the device of Figure 11 illustrating the steps of dispensing the flowable composition from the first chamber into the second chamber of the device;

### Detailed Description

3M Company's popular L-Pop^{™} Adhesive line of products have provided single step, unit-dose adhesives or primers for both dental and orthodontic uses. Its unique packaging kept contents divided into two compartments during storage, until the dental professional was ready to etch, prime and bond in a single step by mixing the contents together.

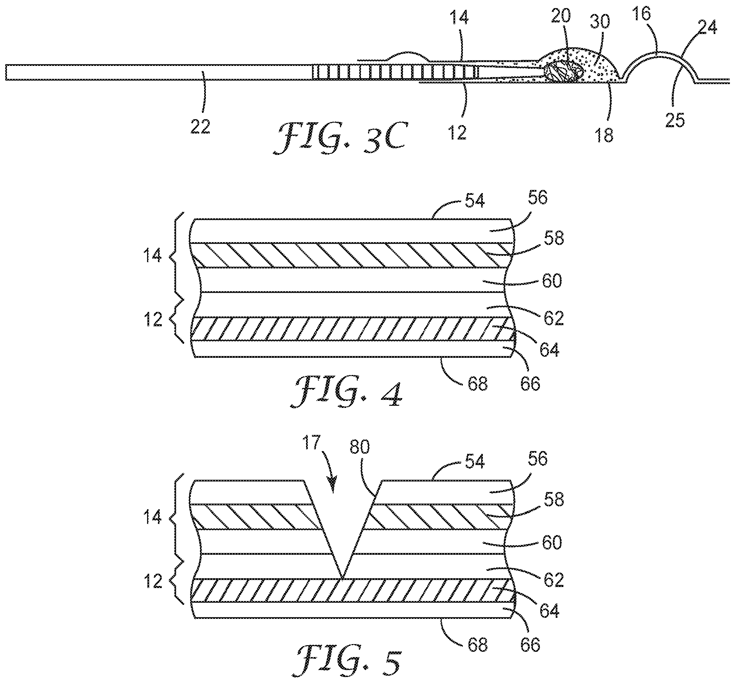

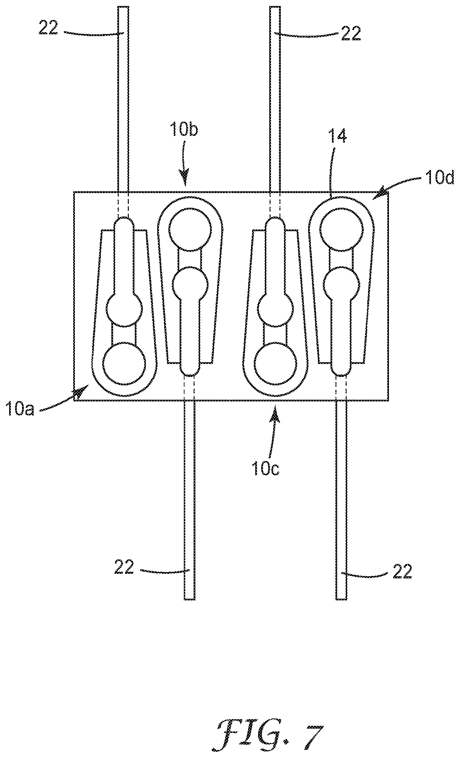

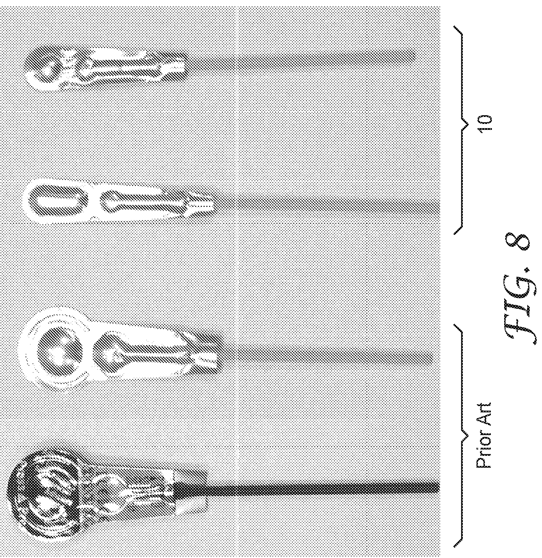

The present invention focuses on the sustainable or environmental aspects of a similar L-pop design. In the newly redesigned embodiments, the materials for the layers or laminate foils are reduced up to 50% compared to conventional L-pop products. For example, the present invention reduces the amount of laminate foils necessary to make the device from 0.24 g to 0.12 g. Figure 8 illustrates the size difference between prior art L-pop designed products by 3M, shown as the left two items and the new design of the present invention, shown as the right two embodiments, discussed more below. In addition, manufacturing production may be almost doubled, while only using nearly the same amount of material. Figure 7 helps illustrate this aspect, also discussed more below. Also, the geometry of the packaging of the present invention has been redesigned to decrease the likelihood of laminate or layer wrinkles occurring in the liquid storage chamber, thereby maximizing the amount of flowable dental or orthodontic composition stored and then dispensed from the chamber or compartment. The absences of layer wrinkles also minimizes unused contents left in the chamber, as illustrated in Figure 3C. Lastly, the present invention includes a unique light disruption feature, which avoids premature aging (chemical degradation) or prematurely curing of the stored dental substance.

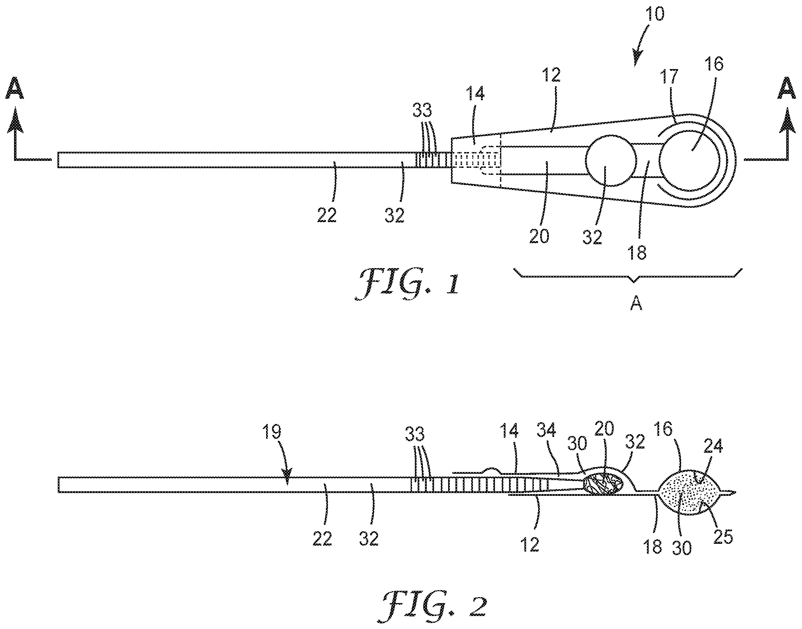

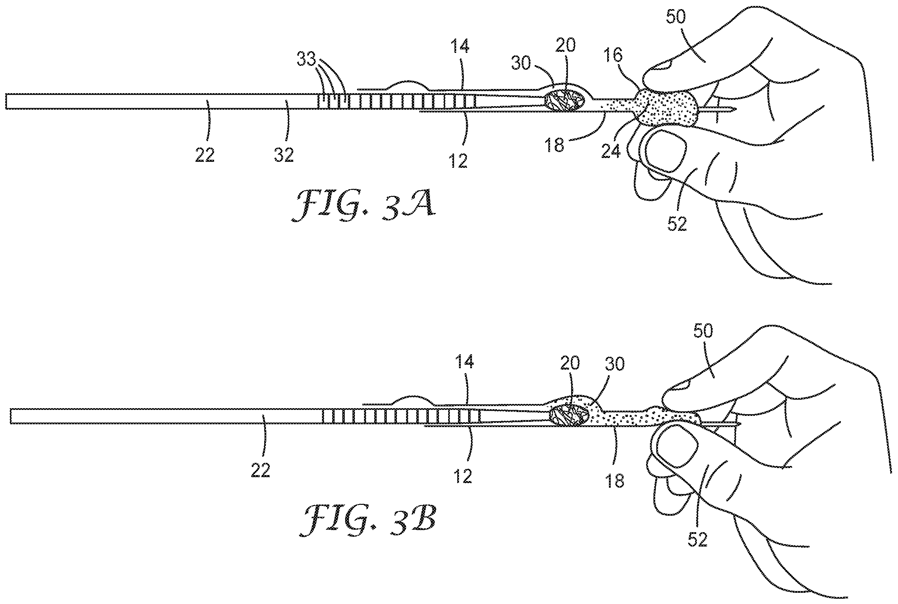

An exemplary device 10 of the present invention is illustrated in Figures 1 and 2. In these Figures, the device is in an inactive state. For example, this is how the device may be stored prior to use. Figures 3A-3C illustrate the device 10 of the present invention in an active state. For example, illustrating the device 10 while in use.

The device 10 includes a first layer 12 and a second layer 14. Each layer 12, 14 preferably is a laminated foil, which is made from both plastic layers and metal foil. The two layers 12, 14 are sealed to each other in a peelable manner, and form a first chamber 16 and a second chamber 32. The first chamber is formed by a portion of the first layer 12 having a first concave surface 25 and a portion of the second layer 14 having a second concave surface 24 opposite the first concave surface 25. Each concave surface is viewed relative to the side view of the horizontal axis A-A running the length of the device 10 or alternatively from the view of the composition 30 filled into the chamber. The description of the form of a layers 12, 14 as "concave" or "convex" does not, however, exclude the possibility of the layer changing its curvature characteristics, in particular in edge zones.

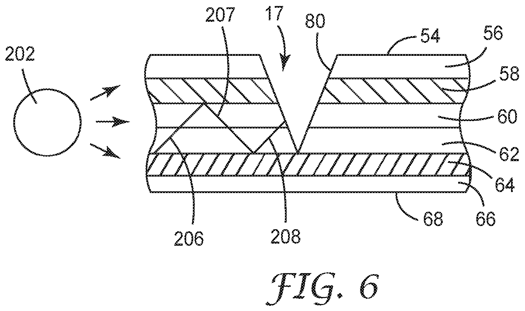

A flowable composition 30, preferably a flowable dental or orthodontic composition 30, is housed in the first chamber 16 during the device's inactive state. Examples of flowable dental composition 30 may include adhesives, flowable composites, cements, liners, sealants, caries indicators, desensitizers, caries arrest liquids. Examples of flowable orthodontic compositions also include adhesives. The layers 12, 14 are formed to accommodate the volume of the composition 30 in the first chamber 16. In some embodiments the composition 30 may be exposed to ambient light entering the first chamber 16 via a light pathway between layers 12 and 14. In some embodiments the entrance of ambient light into chamber 16 may occur when layers 12 and 14 further include clear or translucent seal layers; such seal layer(s) may form a kind of light guide or light pathway. In other words, light propagates by total internal reflection within lightguide until reaching the chamber 16 and the composition 30 contained therein. Due to the possibility of premature curing of the dental compositions 30, while the device 10 is in storage, the device preferably includes a light disruption portion 17. Light disruption portions 17 may come in many forms. One exemplary form is a cut portion 80, described in more detail below relative to Figures 5 and 6.

The two layers 12, 14 also form a transition zone that can be selectively opened, by having peel ability in a predetermined breaking zone located between a first chamber 16 and a second chamber 32 formed between the two layers 12, 14. The two layers 12, 14 also form a dispensing zone 34, which retains an applicator 19. The applicator includes an applicator head 20 mounted on the end of a handle 22. The handle 22 may include optional grip assist portions 33. The head 20 is retained within the second chamber 32. The second chamber 32 is shaped to have a relatively flat base and an convex covering portion covering the head 20.

As illustrated in Figures 3A-3C, the device 10 is activated by exerting external pressure on the first chamber 16. A user may activate the device from its inactive state into an active state by applying external pressure, by way of the user's index finger 50 and thumb 52. In this respect, the device is activated by such pressure being exerted on the first chamber 16, whereby the composition 30 located in the first chamber 16 is transferred into the second chamber 32 via the transition zone 18 which is being selectively opened by the fluid pressure and the flow of the composition 30 between the first layer 12 and second layer 14 in such zone. The transition zone 18 that can be selectively opened consequently represents, as it were, a kind of predetermined breaking point, at which first chamber 16 opens and composition 30 flows through the transition zone 18 and into the second chamber 32. The transition zone 18 is designed such that, in the storage state or inactive state, it forms a sealed closure, both between the two chambers 16, 32 and with respect to the zone 34 via which the composition 30 is to be dispensed.

The chambers 16, 32 are preferably formed such that they are round (circular or oval, etc.) but, if appropriate, also could be angular (square, rectangular or triangular, etc. with rounded or sharp edges). Preferably, first chamber 16 is hermetically sealed along its entire circumference. The activation of the device 10 is capable of being seen visually by exerting pressure on the first chamber 16.

The dispensing zone 34 is preferably formed such that it is open towards one side, i.e. pocket-like, and formed such that a dispensing instrument or an applicator 19 can be introduced in the inactive or storing state. The applicator 19 is preferably designed like a brush or a swab. Alternatively, pipettes, cotton sticks, sponges, spatulas or spray heads sealed into the dispensing zone 34 could be used as an application instrument or as application device.

When the device 10 is in the active state and the dental composition flows into the second chamber 32, the applicator 19 located in the dispensing zone 34 is wetted and can subsequently be used for applying the released dental composition 30. It is also possible for the applicator 19 be moved in the direction of the first chamber 16, to release the transition zone 18 that can be selectively opened. This likewise results in the head 20 of the applicator 19 being wetted. If repeated application of the released substance is necessary, the applicator 19 can be re-inserted into the pocket dispensing zone 34. The dispensing zone 34 or the applicator 19 is preferably designed such that, when it is re-inserted, wetting of the majority of the handle 22 of the applicator 19 does not take place. This may happen, for example, by a channel-shaped formation of the dispensing zone 34 and a matching formation of the applicator handle 22. Also, the second layer 14 may be configured in a dish-shaped or well-shaped manner in the dispensing zone, into which the substance is conveyed for repeated wetting of the applicator 19 without wetting the handle 22 by squeezing out the second chamber in a way similar to in the case of tubes.

The dispensing zone 34 may also serve as an application device itself if there is a correspondingly small diameter of the opening towards the outside, for example in the form of a cannula.

Preferably, the two layers 12, 14 are cold formed to provide the design as described above. For example, cold forming may involve placing layers 12, 14 containing the metal foils within a die and squeezing the two layers together into a formed by the die, while the metal in the die is at room temperature or below the metal foils recrystallization temperature, to form the desired shape or configuration within the layers.

With the exception of the areas forming the chambers 16, 32, the layers 12, 14 are preferably connected to one another in surface-to-surface area contact. As an alternative, the connection of the first layer 12 to the second layer 14 may take place, for example, by heat-sealing, adhesive bonding and/or ultrasonic welding with sonotrodes. The first and second layers 12, 14 are adhered together in the inactive state in the transition zone 18 and around the first and second chambers 16. 26. In this state, the transition zone 18 has a reduced adherence between the first and second layers 12, 14 compared to the other areas around the first and second chambers 16, 32.

When the device 10 is in an inactive state, the first cold-formed, internal surface 24 of first chamber 16 is concave and the second cold-formed, internal surface 25 of first chamber 16 is concave. When the device 10 is in an active state, the first cold-formed, internal surface 24 of first chamber 16 remains concave from the internal perspective, and the second cold-formed surface 25 is deformed convex . Or, both layers 12, 14 are round or something in between such as partly convex and partly concave, but always in nearly full surface contact with each other). Regardless, the flowable dental composition 30 is thereby dispensed from the first chamber 16 through the transition zone 18. By surface 24 and surface 25 having matching surface areas, the complete expulsion of composition 30 from chamber 16 is readily facilitated when surface 25 is deformed convexly to match and mate with surface 24 remaining in the concave configuration. This is possible because both surfaces 24, 25 were previously cold-formed. One illustration of this phenomena is in Figure 3C.

Figures 4 and 5 illustrate an exemplary device 10 having multilayer layers 12, 14. Both the first layer 12 and the second layer 14 have three layers. The second layer 14 has a top layer 56, and the first layer 12 has a bottom layer 66. Both layers 56, 66 may be made of clear materials. Examples of suitable materials for the clear materials in layers 56, 66 include polyethylene (PE), polypropylene (PP), polyethylene terephthalate (PET), polyamide (PA), polyvinyl chloride (PVC), ethylene vinyl alcohol (EVA), and PVF (polyvinyl fluoride). The second layer 14 includes a foil layer 58 adjacent the top layer 56. The first layer 12 has a foil layer 64. The middle foil layers 58, 64 are metallic foil, preferably aluminum. The first layer 12 also includes a film or seal layer 62. Examples of suitable film or seal layers 60 and 62 include polymeric and/or adhesive films. In some embodiments the polymeric seal layers 60 and 62 are clear or translucent. In those embodiments where one or both of seal layers 60 and 62 are clear or translucent the phenomenon of a light guide may occur between foil layers 58, 64, when layers 58 and 64 are at least partially reflective, as in the case of being aluminum.

The first layer also includes a film or seal layer 60. The second layer 14 also includes a film or seal layer 62. Examples of suitable film or seal layers 60 and 62 include polymeric and/or adhesive layers. In some embodiments the polymeric seal layers 60 and 62 are clear or translucent. In those embodiments where one or both of seal layers 60 and 62 are clear or translucent the phenomenon of a light guide may occur between foil layers 58, 64 when layers 58 and 64 are at least partially reflective, as in the case of being metallic foil, such as aluminum. Examples of suitable seal layers include polyethylene (PE), polypropylene (PP), polytetrafluoroethylene (PTFE), polyethylene terephthalate (PET), polyamide (PA), polybutylene terephthalate (PBT), polyvinyl chloride (PVC), ethylene vinyl alcohol ( EVA), and PVF (polyvinyl fluoride).

As mentioned above, the device preferably includes a light disruption portion 17. Figure 5 illustrates one example of such a light disruption portion 17 (As illustrated, the light disruption portion 17 includes a cut portion 80. Alternatively, the cut 80 also could come from the opposite side starting at layer 12). The cut portion 80 serves as a disruption of the potential light guide of any ambient light or direct light outside of the device 10. The light is directed through the film layers, 60, 62 and internally reflects between metal foil layers 58 and 64. In a preferred embodiment, illustrated in Figure 1, the cut portion 80 may be shaped to partially surround the first chamber 16. This light disruption portion 17 helps prevent any premature curing or aging of the dental composition stored in the first chamber 16, particularly those compositions which are photo-cured, for example cured by UV curing lights. In addition, the layers 12, 14 may include layers having adequate diffusion impermeability. Other embodiments of light disruption portions 17 include the carbon black materials in layer 60 and/or layer 62. In some other embodiments, light disruption portion 17 may include coating the aluminum layer(s) 58 and/or 64 with carbon black. In some embodiments light disruption portion 17 may include doping layers, 60 and 62 with carbon black or other additives to disrupt the internal reflection of light between foil layers 58 and 64.

Figure 6 shows a schematic cross section of the exemplary light disruption portion 17 in use with a light source 202 Ambient light schematically illustrated by light source 202 is positioned relative to the device 10 such that light emitted by the light source enters the layer 12, 14 and is transported within the device by total internal reflection. Light will not enter through the top or bottom of the device 10 due to the metallic foil, such as aluminum, or otherwise opaque layers 58, 64, which reflects the light outward from the device. Ambient light emitted by the light source is represented by rays externally, and then are represented by single rays 206, 207, 208, which are transported by total internal reflection. The light disruption portion 17 which in this case is the cut portion 80 serves to stop the propagation of internal reflection of the light ray 208. Additionally, the process of creating cut portion 80 may also create deformations (not shown) in one or both of layers 58 and 64; such deformations in the form of slight bends and wrinkles may themselves provide the primary functionality of light disruption portion 17. As a result, the composition 30 is protected from such light rays. As illustrated in Figure 1, the cut portion 80 encircles the first chamber 16 containing the composition 30 to provide such protection.

The multilayer construction of the first and second layers 12, 14 can be achieved by laminating, calendaring, laminating of various layers comprising single layers, if appropriate also by vapor-depositing, for example with metals such as aluminum. Also, depending on the application area and the desired deformability, the layers 12, 14 are stretched or are in an unstretched state before the activation of the device 10. The layers may be chosen from plastic layers, metal foils and ceramic sheets. Suitable plastic layers are, for example: PE, PP, PTFE, PET, PA, PBT, PVC, EVA, PVF (polyvinyl fluoride). Suitable metal foils are, for example: aluminum (Al), tin (Sn), gold (Au), silver (Ag), iron (Fe) based such as steel, and lead (Pb). Suitable ceramic sheets are to be understood as meaning layers which have, for example, a layer containing SiOx.

The volume of the first chamber 16 usually lies in the range from 5 to 500 µl, preferably in the range from10 to 250µl. The volume of the second chamber 32 is preferably less than or equal to the volume of the first chamber, at least before the activation of the device, and lies in the range from 3 to 500 µl, preferably in the range from 5 to 250 µl. The first chamber 16 has, for example, a diameter from 1 to 25 mm, preferably in the range from 5 to 15 mm. The second chamber 32 has, for example, a diameter from 1 to 25 mm, preferably in the range from 5 to 15 mm.

The device 10 can be produced, for example, by the following method: a) providing a first layer 12; b) cold forming the first layer 12, thereby partially forming the first and second chambers 16, 32; c) filling of the first chamber 16 with the flowable dental composition 30; d) providing a second layer 14; e) cold forming the second layer 14, thereby partially forming the first and second chambers 16, 32; f) sealing the second layer 14 to the first layer 12 to a great extent in surface-area contact, leaving the chambers 16, 32 free and forming a transition zone 18 that can be selectively opened between the two chambers 16 and 32 and in the dispensing zone 34; g) dye cutting the outer contour or desired shape of the device; and h) cutting the layers with cut 80 for the light disruption portion 17. For the sealing step, this may be done in two phases. The first phase seals the two layers 12, 14 together, but they are still peelable. The second phase seals the two layers 12, 14 together, making them unpeelable in all areas except for the transition zone 18 and the open chambers 16, 32.

Figure 7 illustrates an intermediate step in the manufacturing process described above. In Figure 7, steps a)-f) have been completed. To achieve the objective of making a more sustainable and environmentally friendly device, the devices 10a-10d are arranged as illustrated so as to optimize the use of the materials. This arrangement helps increase the manufacturing production.

Figure 8 is a photograph illustrating a side-by-side comparison of the prior art L-Pop design, in particular the 3M^{™} Scotchbond^{™} Universal L-Pop adhesive (left two images, front and back), compared to the present inventive device 10 (right two images, front and back). Figure 8 is a photograph illustrating the differences between a prior art device (both on the left side are prior art) and the devices of the present invention without a light disruption portion 17.

The devices 10 are illustrated with different shapes for the first chamber 16. In this case, the first chamber 16 are ovals or circles. However, the first chamber 16 may be any shape desired.

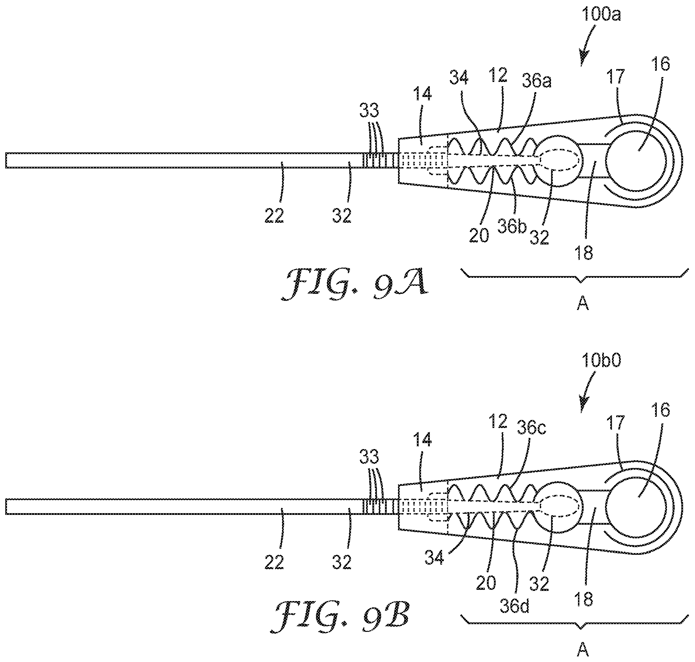

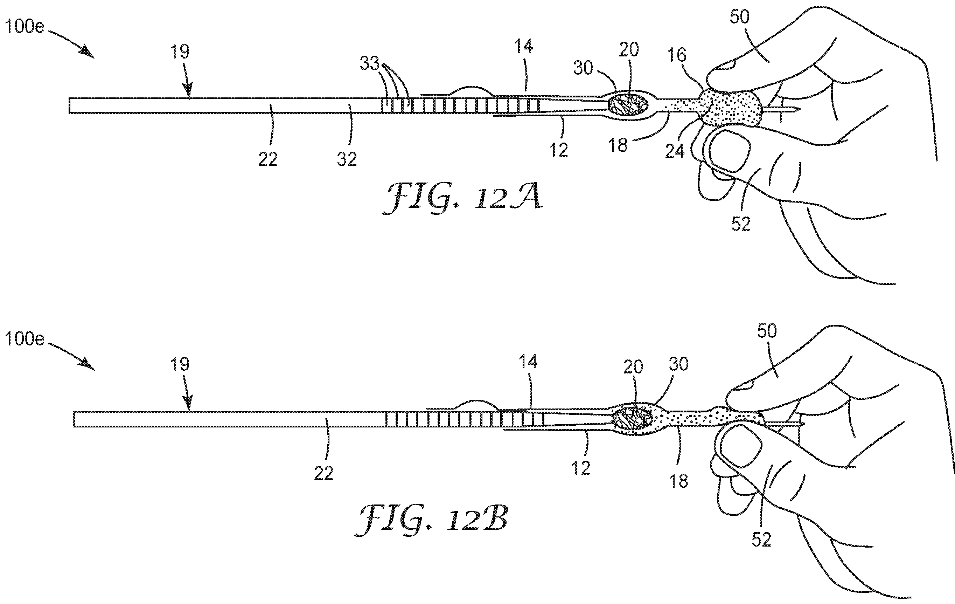

Other exemplary devices 100 of the present invention are illustrated in Figures 9A-9C, 10 and 11. In these Figures, the device 100 is in an inactive state. For example, this is how the device 100 may be stored prior to use. Figures 12A-12D illustrate the one of the devices 100e of the present invention in an active state. For example, illustrating the device 100e while in use.

Device 100a, 100b, 100c, 100d, and 100e are very similar to the devices 10 shown in the prior Figures, except that each device includes optional flow barriers 36 in the dispensing zones 34. The flow barriers 36 help avoid excess flowable dental composition 30 accidently splashing out of the dispensing zone 34 during activation of the device 100 or while the brush head 20 is pulled by the applicator 22 out of the second chamber 32. Instead, the flow barriers allow some of the excess composition 30 to be swiped away from the saturated brush head 20, thus allowing a user to apply the composition 30 in a more controlled manner and to leave unnecessary composition 30 within the device 100. The flow barriers 36 can also improved the fit of the brush head 20 and handle 22 within the dispensing zone 34 and second chamber 30 to help prevent the applicator 19 from accidently falling out of the device 100.

Similar to device 10 described above, device 100a-e includes a first layer 12 and a second layer 14. Each layer 12, 14 preferably is a laminated foil, which is made from both plastic layers and metal foil. The two layers 12, 14 are sealed to each other in a peelable manner, and form a first chamber 16 and a second chamber 32. The first chamber is formed by a portion of the first layer 12 having a first concave surface 25 and a portion of the second layer 14 having a second concave surface 24 opposite the first concave surface 25. Each concave surface is viewed relative to the side view of the horizontal axis A-A running the length of the device 10 or alternatively from the view of the composition 30 filled into the chamber. The description of the form of a layers 12, 14 as "concave" or "convex" does not, however, exclude the possibility of the layer changing its curvature characteristics, in particular in edge zones.

The layers 12, 14 are formed to accommodate the volume of the composition 30 in the first chamber 16. The two layers 12, 14 also form a transition zone 18 that can be selectively opened, by having peel ability in a predetermined breaking zone located between a first chamber 16 and a second chamber 32 formed between the two layers 12, 14. The two layers 12, 14 also form a dispensing zone 34. The dispensing zone 34 is formed by flow barriers 36 which are areas where the two layers 12, 14 are sealed forming a pocket there between to retain shaft 32 of the applicator 22.

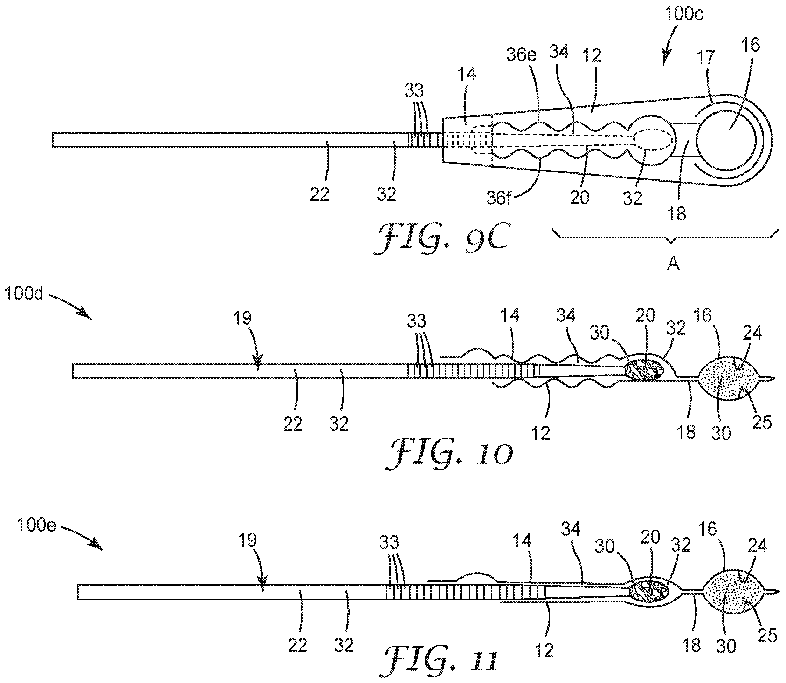

In the embodiments illustrated in Figures 9A-9C, the dispensing zone 34 may take many forms. In Figure 9A, the dispensing zone 34 in device 100a includes a first flow barrier 36a and a second flow barrier 36b. In this embodiment, the flow barriers 36a, 36b are in opposite sine wave configurations. In Figure 9B, the dispensing zone in device 100b has flow barriers 36c, 36d in aligned sine wave configurations. Figure 9C illustrates a device 100c having a dispensing zone 34 with flow barriers 36e, 36f in an opposite sine wave configurations stretched out to have less peaks and valleys.

Figure 10 illustrates yet another embodiment for a dispensing zone 34. Instead of having a relatively flat base for the first film 12 as illustrated in the prior Figures, Figure 10 includes curved first film 12 and a curved second film 14 in the dispensing zone 34. The curved flow barriers are aligned perpendicular to the axis of the applicator 19.

Figure 11 illustrates an alternative device 100 that is very similar to the devices described previously, but the first film 12 in this device 100e is not completely flat, as illustrated in Figure 3. Instead, the first film in device 100e is more loose and concave, thus forming a more symmetrical second chamber 30.

As illustrated in Figures12A-12D, the device 100e is activated by exerting external pressure on the first chamber 16. A user may activate the device from its inactive state into an active state by applying external pressure, by way of the user's index finger 50 and thumb 52. In this respect, the device is activated by such pressure being exerted on the first chamber 16, whereby the composition 30 located in the first chamber 16 is transferred into the second chamber 32 via the transition zone 18 which is being selectively opened by the fluid pressure and the flow of the composition 30 between the first layer 12 and second layer 14 in such zone. The transition zone 18 that can be selectively opened consequently represents, as it were, a kind of predetermined breaking point, at which first chamber 16 opens and composition 30 flows through the transition zone 18 and into the second chamber 32. The transition zone 18 is designed such that, in the storage state or inactive state, it forms a sealed closure, both between the two chambers 16, 32 and with respect to the zone 34 via which the composition 30 is to be dispensed.

The chambers 16, 32 are preferably formed such that they are round (circular or oval, etc.) but, if appropriate, also could be angular (square, rectangular or triangular, etc. with rounded or sharp edges). Preferably, first chamber 16 is hermetically sealed along its entire circumference. The activation of the device 10 is capable of being seen visually by exerting pressure on the first chamber 16.

The dispensing zone 34 is preferably formed such that it is open towards one side, i.e. pocket-like, and formed such that a dispensing instrument or an applicator 19 can be introduced in the inactive or storing state. The applicator 19 is preferably designed like a brush or a swab. Alternatively, pipettes, cotton sticks, sponges, spatulas or spray heads sealed into the dispensing zone 34 could be used as an application instrument or as application device.

When the device 10 is in the active state and the dental composition flows into the second chamber 32, the applicator 19 located in the dispensing zone 34 is wetted and can subsequently be used for applying the released dental composition 30. It is also possible for the applicator 19 be moved in the direction of the first chamber 16, to release the transition zone 18 that can be selectively opened. This likewise results in the head 20 of the applicator 19 being wetted. If repeated application of the released substance is necessary, the applicator 19 can be re-inserted into the pocket dispensing zone 34. The dispensing zone 34 or the applicator 19 is preferably designed such that, when it is re-inserted, wetting of the majority of the handle 22 of the applicator 19 does not take place. This may happen, for example, by a channel-shaped formation of the dispensing zone 34 and a matching formation of the applicator handle 22. Also, the second layer 14 may be configured in a dish-shaped or well-shaped manner in the dispensing zone, into which the substance is conveyed for repeated wetting of the applicator 19 without wetting the handle 22 by squeezing out the second chamber in a way similar to in the case of tubes.

Preferably, the two layers 12, 14 are cold formed to provide the design as described above. For example, cold forming may involve placing layers 12, 14 containing the metal foils within a die and squeezing the two layers together into a formed by the die, while the metal in the die is at room temperature or below the metal foils recrystallization temperature, to form the desired shape or configuration within the layers.

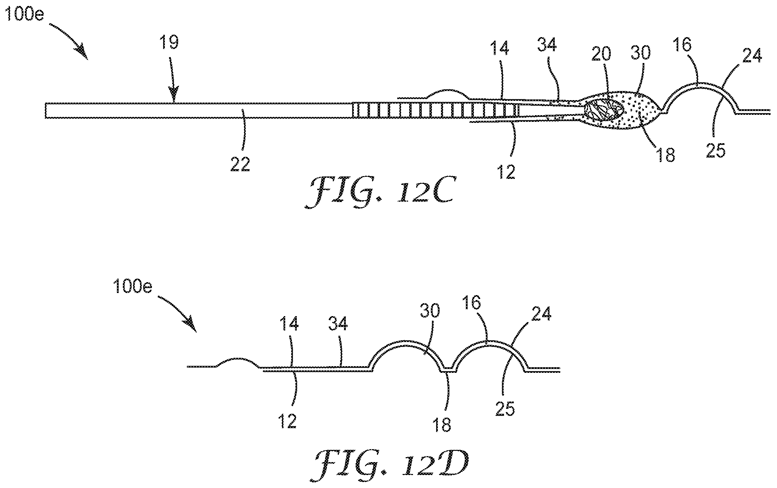

When the device 10 is in an inactive state, the first cold-formed, internal surface 24 of first chamber 16 is concave and the second cold-formed, internal surface 25 of first chamber 16 is concave. Likewise, in the inactive state, the internal surface 24 and internal surface 25 of the second chamber 30 are both concave. When the device 10 is in an active state, the first cold-formed, internal surface 24 of first chamber 16 remains concave from the internal perspective, and the second cold-formed surface 25 is deformed convex . Or, both layers 12, 14 are round or something in between such as partly convex and partly concave, but always in nearly full surface contact with each other. Regardless, the flowable dental composition 30 is thereby dispensed from the first chamber 16 through the transition zone 18. By surface 24 and surface 25 having matching surface areas, the complete expulsion of composition 30 from chamber 16 is readily facilitated when surface 25 is deformed convexly to match and mate with surface 24 remaining in the concave configuration. This is possible because both surfaces 24, 25 were previously cold-formed. One illustration of this phenomena is in Figure 12C.

Continuing, after the complete expulsion of the composition from second chamber 30 through the transition zone 34, and the withdrawal of the applicator 19 from the device 100e, the first cold-formed, internal surface 24 of second chamber 30 remains concave from the internal perspective, and the second cold-formed surface 25 of the second chamber 30 is deformed convex Or, both layers 12, 14 are round or something in between such as partly convex and partly concave, but always in nearly full surface contact with each other. By surface 24 and surface 25 having matching surface areas, the complete expulsion of composition 30 from chamber 30 is readily facilitated when surface 25 is deformed convexly to match and mate with surface 24 remaining in the concave configuration. This is possible because both surfaces 24, 25 were previously cold-formed. One illustration of this phenomena is in Figure 12D. The configuration of the cold-formed foils further assist in the sustainability aspect of the device of the present invention and assist in reducing manufacturing costs overall.

Although both dental and orthodontic compositions are discussed above for use in device 10, other flowable compositions are also possible, such as perfume, lotions, lubricants, oils, paint, and permanent adhesives.

## Claims

1. A device (10) for storing and dispensing a flowable dental composition, comprising:
a first layer (12) and a second layer (14), wherein the first layer and second layer form a first chamber (16) containing a flowable dental composition (30), a transition zone (18), and a second chamber (30);
an applicator (19) retained within the second chamber;
wherein the first chamber has a first concave surface (25) formed in the first layer and a second concave surface (24) formed in the second layer;
wherein the device includes an inactive state and an active state, wherein when in the inactive state, the composition is retained in the first chamber, and wherein when in the active state, a portion of the second surface is substantially non-reversibly deformed in response to pressure applied to the first chamber and the composition is thereby dispensed through the transition zone and into the second chamber,
wherein the first concave surface and second concave surface are cold-formed,
wherein the first layer and second layer comprise a first clear layer (56, 66), a second layer (58, 64) of metallic foil, and a third seal layer (60, 62), and
wherein a light disruption portion (17) at least partially surrounding the first chamber comprises a cut portion (80) through the first layer and part of the second layer.

2. The device of claim 1, wherein one of the third seal layers (60, 62) comprise carbon black.

3. The device of claim 1, when the device is in an inactive state, the first cold-formed surface (25) is concave and the second cold-formed surface (24) is concave, when the device is in an active state, the first cold-formed surface remains concave and the second cold-formed surface is deformed convex and the flowable dental composition (30) is thereby dispensed from the first chamber (16) through the transition zone (18).

4. The device of claim 1, wherein a portion of the second cold-formed surface (24) is substantially non-reversibly deformed in response to pressure applied to the first chamber (16) and forms a smooth surface aligned with the first concave surface (25).

5. The device of claim 1, when the device is in an active state, the first cold-formed surface (25) remains concave with no substantial wrinkles, and the second cold-formed surface (24) is deformed with no substantial wrinkles into a convex surface.

6. The device of claim 1, wherein the first chamber (16) is hermetically sealed along its entire circumference.

7. The device of claim 1, wherein a dispensing zone (34) is connected to the second chamber (30), and where the dispensing zone retains a shaft (32) of the applicator (19).

8. The device of claim 1, wherein the first and second layer (56, 66, 58, 64) are adhered together by heat sealed.

9. The device of claim 1, wherein the first and second layer (56, 66, 58, 64) are adhered together in the inactive state in the transition zone (18) and around the first and second chambers (16, 30), and
wherein the transition zone has a reduced adherence between the first and second layers compared to the other areas around the first and second chambers.

10. The device of claim 1, wherein a brush head (20) of the applicator (19) is within the second chamber (30).

11. The device of claim 1, wherein a brush head (20) of the applicator (19) enters the transition zone (18) during the active state.

12. The device of claim 1 further comprising a dispensing zone (34) formed between the first layer (56, 66) and the second layer (58, 64), wherein the dispending zone comprises a first flow barrier (36a) and a second flow barrier (36b).

13. The device of claim 12, wherein the first flow barrier (36a) and second flow barrier (36b) are configured in the shape of a wave.

14. The device of any of the previous claims,
wherein the materials of the clear layers (56, 66) are selected from polyethylene, polypropylene, polyethylene terephthalate, polyamide, polyvinyl chloride, ethylene vinyl alcohol, and polyvinyl fluoride, and
wherein the materials of the seal layers (60, 62) are selected from polyethylene, polypropylene, polytetrafluoroethylene, polyethylene terephthalate, polyamide, polybutylene terephthalate, polyvinyl chloride, ethylene vinyl alcohol, and polyvinyl fluoride.

## Patentansprüche

1. Eine Vorrichtung (10) zum Aufbewahren und Abgeben einer fließfähigen Dentalzusammensetzung, aufweisend:
eine erste Schicht (12) und eine zweite Schicht (14), wobei die erste Schicht und die zweite Schicht eine erste Kammer (16) ausbilden, die eine fließfähige Dentalzusammensetzung (30), eine Übergangszone (18) und eine zweite Kammer (30) enthält;
einen Applikator (19), der innerhalb der zweiten Kammer zurückgehalten wird;
wobei die erste Kammer eine erste konkave Oberfläche (25) aufweist, die in der ersten Schicht ausgebildet ist, und eine zweite konkave Oberfläche (24), die in der zweiten Schicht ausgebildet ist;
wobei die Vorrichtung einen inaktiven Zustand und einen aktiven Zustand hat, wobei in dem inaktiven Zustand die Zusammensetzung in der ersten Kammer zurückgehalten wird und wobei in dem aktiven Zustand ein Abschnitt der zweiten Oberfläche im Wesentlichen nicht reversibel verformt wird, als Reaktion auf Druck, der auf die erste Kammer ausgeübt wird, und wodurch die Zusammensetzung durch die Übergangszone und in die zweite Kammer abgegeben wird,
wobei die erste konkave Oberfläche und die zweite konkave Oberfläche kaltgeformt sind,
wobei die erste Schicht und die zweite Schicht eine erste klare Schicht (56, 66), eine zweite Schicht (58, 64) aus Metallfolie und eine dritte Versiegelungsschicht (60, 62) aufweisen, und
wobei ein Lichtunterbrechungsabschnitt (17), der die erste Kammer mindestens teilweise umgibt, einen Schnittabschnitt (80) durch die erste Schicht und einen Teil der zweiten Schicht aufweist.

2. Die Vorrichtung nach Anspruch 1, wobei eine der dritten Versiegelungsschichten (60, 62) Ruß aufweist.

3. Die Vorrichtung nach Anspruch 1, wobei wenn die Vorrichtung in einem inaktiven Zustand ist, die erste kaltgeformte Oberfläche (25) konkav ist und die zweite kaltgeformte Oberfläche (24) konkav ist, wenn die Vorrichtung in einem aktiven Zustand ist, die erste kaltgeformte Oberfläche konkav bleibt und die zweite kaltgeformte Oberfläche konvex verformt ist und die fließfähige Dentalzusammensetzung (30) dadurch aus der ersten Kammer (16) durch die Übergangszone (18) abgegeben wird.

4. Die Vorrichtung nach Anspruch 1, wobei ein Abschnitt der zweiten kaltgeformten Oberfläche (24) im Wesentlichen nicht umkehrbar verformt wird, als Reaktion auf Druck, der auf die erste Kammer (16) ausgeübt wird, und eine glatte Oberfläche ausbildet, die mit der ersten konkaven Oberfläche (25) ausgerichtet ist.

5. Die Vorrichtung nach Anspruch 1, wobei wenn die Vorrichtung in einem aktiven Zustand ist, die erste kaltgeformte Oberfläche (25) konkav ohne wesentliche Falten bleibt und die zweite kaltgeformte Oberfläche (24) ohne wesentliche Falten zu einer konvexen Oberfläche verformt wird.

6. Die Vorrichtung nach Anspruch 1, wobei die erste Kammer (16) entlang ihres gesamten Umfangs hermetisch abgedichtet ist.

7. Die Vorrichtung nach Anspruch 1, wobei eine Abgabezone (34) mit der zweiten Kammer (30) verbunden ist und wobei die Abgabezone einen Schaft (32) des Applikators (19) zurückhält.

8. Die Vorrichtung nach Anspruch 1, wobei die erste und die zweite Schicht (56, 66, 58, 64) durch Heißsiegeln aneinander anhaften.

9. Die Vorrichtung nach Anspruch 1, wobei die erste und die zweite Schicht (56, 66, 58, 64) in dem inaktiven Zustand in der Übergangszone (18) und um die erste und die zweite Kammer (16, 30) herum aneinander anhaften, und
wobei die Übergangszone eine verringerte Haftung zwischen der ersten und der zweiten Schicht im Vergleich zu den anderen Bereichen um die erste und zweite Kammer herum aufweist.

10. Die Vorrichtung nach Anspruch 1, wobei ein Bürstenkopfstück (20) des Applikators (19) innerhalb der zweiten Kammer (30) ist.

11. Vorrichtung nach Anspruch 1, wobei ein Bürstenkopfstück (20) des Applikators (19) während des aktiven Zustands in die Übergangszone (18) eintritt.

12. Die Vorrichtung nach Anspruch 1, die ferner eine Abgabezone (34), die zwischen der ersten Schicht (56, 66) und der zweiten Schicht (58, 64) ausgebildet ist, aufweist, wobei die Abgabezone eine erste Flussbarriere (36a) und eine zweite Flussbarriere (36b) aufweist.

13. Die Vorrichtung nach Anspruch 12, wobei die erste Flussbarriere (36a) und die zweite Flussbarriere (36b) wellenförmig ausgebildet sind.

14. Die Vorrichtung nach einem der vorstehenden Ansprüche,
wobei die Materialien der klaren Schichten (56, 66) aus Polyethylen, Polypropylen, Polyethylenterephthalat, Polyamid, Polyvinylchlorid, Ethylenvinylalkohol und Polyvinylfluorid ausgewählt sind, und
wobei die Materialien der Versiegelungsschichten (60, 62) aus Polyethylen, Polypropylen, Polytetrafluorethylen, Polyethylenterephthalat, Polyamid, Polybutylenterephthalat, Polyvinylchlorid, Ethylenvinylalkohol und Polyvinylfluorid ausgewählt sind.

## Revendications

1. Dispositif (10) de stockage et de distribution d'une composition dentaire fluidifiable, comprenant :
une première couche (12) et une deuxième couche (14), dans lequel la première couche et la deuxième couche forment une première chambre (16) contenant une composition dentaire fluidifiable (30), une zone de transition (18) et une seconde chambre (30) ;
un applicateur (19) retenu au sein de la seconde chambre ;
dans lequel la première chambre a une première surface concave (25) formée dans la première couche et une seconde surface concave (24) formée dans la deuxième couche ;
dans lequel le dispositif comporte un état inactif et un état actif, dans lequel, dans l'état inactif, la composition est retenue dans la première chambre, et dans lequel, dans l'état actif, une partie de la seconde surface est sensiblement déformée de manière non réversible en réponse à une pression appliquée à la première chambre et la composition est de ce fait distribuée à travers la zone de transition et dans la seconde chambre,
dans lequel la première surface concave et la seconde surface concave sont formées à froid,
dans lequel la première couche et la deuxième couche comprennent une première couche transparente (56, 66), une deuxième couche (58, 64) de feuille métallique et une troisième couche de scellement (60, 62), et
dans lequel une partie de perturbation de lumière (17) entourant au moins partiellement la première chambre comprend une partie découpée (80) à travers la première couche et une partie de la deuxième couche.

2. Dispositif selon la revendication 1, dans lequel l'une des troisièmes couches de scellement (60, 62) comprend du noir de carbone.

3. Dispositif selon la revendication 1, lorsque le dispositif est dans un état inactif, la première surface (25) formée à froid est concave et la seconde surface (24) formée à froid est concave, lorsque le dispositif est dans un état actif, la première surface formée à froid reste concave et la seconde surface formée à froid est déformée convexe et la composition dentaire fluidifiable (30) est de ce fait distribuée à partir de la première chambre (16) à travers la zone de transition (18).

4. Dispositif selon la revendication 1, dans lequel une partie de la seconde surface (24) formée à froid est sensiblement déformée de manière non réversible en réponse à une pression appliquée à la première chambre (16) et forme une surface lisse alignée avec la première surface concave (25).

5. Dispositif selon la revendication 1, lorsque le dispositif est dans un état actif, la première surface (25) formée à froid reste concave sans rides sensibles, et la seconde surface (24) formée à froid est déformée sans rides sensibles en une surface convexe.

6. Dispositif selon la revendication 1, dans lequel la première chambre (16) est hermétiquement scellée le long de toute sa circonférence.

7. Dispositif selon la revendication 1, dans lequel une zone de distribution (34) est reliée à la seconde chambre (30), et où la zone de distribution retient un arbre (32) de l'applicateur (19).

8. Dispositif selon la revendication 1, dans lequel la première et la deuxième couche (56, 66, 58, 64) sont collées ensemble par thermoscellage.

9. Dispositif selon la revendication 1, dans lequel la première et la deuxième couche (56, 66, 58, 64) sont collées ensemble dans l'état inactif dans la zone de transition (18) et autour des première et seconde chambres (16, 30), et
dans lequel la zone de transition a une adhérence réduite entre les première et deuxième couches par comparaison avec les autres zones autour des première et seconde chambres.

10. Dispositif selon la revendication 1, dans lequel une tête de brosse (20) de l'applicateur (19) se trouve au sein de la seconde chambre (30).

11. Dispositif selon la revendication 1, dans lequel une tête de brosse (20) de l'applicateur (19) pénètre dans la zone de transition (18) pendant l'état actif.

12. Dispositif selon la revendication 1 comprenant en outre une zone de distribution (34) formée entre la première couche (56, 66) et la deuxième couche (58, 64), dans lequel la zone de distribution comprend une première barrière d'écoulement (36a) et une seconde barrière d'écoulement (36b).

13. Dispositif selon la revendication 12, dans lequel la première barrière d'écoulement (36a) et la seconde barrière d'écoulement (36b) sont conçues sous la forme d'une vague.

14. Dispositif selon l'une quelconque des revendications précédentes,
dans lequel les matériaux des couches transparentes (56, 66) sont choisis parmi le polyéthylène, le polypropylène, le polyéthylène téréphtalate, le polyamide, le chlorure de polyvinyle, l'éthylène alcool de vinyle et le fluorure de polyvinyle, et
dans lequel les matériaux des couches de scellement (60, 62) sont choisis parmi le polyéthylène, le polypropylène, le polytétrafluoroéthylène, le polyéthylène téréphtalate, le polyamide, le polybutylène téréphtalate, le chlorure de polyvinyle, l'éthylène alcool de vinyle et le fluorure de polyvinyle.
